# EUROPEAN PATENT SPECIFICATION

(11) **EP 0 457 624 B1**
(45) Date of publication and mention of the grant of the patent: **04.10.1995**
(21) Application number: 91304514.2
(22) Date of filing: 20.05.1991
(51) Int. Cl.: G01N 21/35

(54) **A gas detector**
Gasdetektor
Détecteur de gaz

(30) Priority: 18.05.1990 GB 9011174
(43) Date of publication of application: 21.11.1991
(73) Proprietor: Zellweger Analytics Limited, Nuffield Estate Poole, Dorset BH17 0RZ (GB)
(72) Inventor: Lee, Clive, Blandford, Dorset DT11 8QN (GB); Ewyk, R. Van, Dr., Corfe Mullen, Wimbourne, Dorset (GB)
(74) Representative: Brereton, Paul Arthur

(56) References cited:
- EP-A- 0 123 458
- DE-A- 2 303 037
- DE-A- 3 544 015
- GB-A- 1 601 233
- US-A- 4 489 239
- US-A- 4 899 053
- PATENT ABSTRACTS OF JAPAN vol. 12, no. 53 (P-668)(2900), 18 February 1988 ; & JP-A-62 201 334

## Description

Operations on industrial sites such as coal mines, oil platforms or chemical processing plants are dependent on continuous monitoring of the environment to provide early warning of the build-up of combustible or toxic gases before dangerous levels are reached. Instruments for monitoring mist be sufficiently rugged and robust to stand up to the harsh environment of such industrial sites.

For gas or vapour detection in such operations, the selective absorption of electromagnetic radiation by the offending gases provides a basis of detection which has been applied in instrument design.

The present invention relates to an apparatus for detecting a gas by selective absorption of optical radiation.

The present invention also relates to a gas detector comprising a substrate carrying an arrangement of optical elements.

Gas detectors based on the optical absorption of radiation depend on using a norrow band of radiation centred on a frequency which is identifiable with a strong absorption in the absorption spectrum of the gas to be detected. The term "optical" is used to refer to radiation ranging between ultra-violet and infra-red.

In one form of a gas measuring instrument, a radiation beam of a narrow waveband is passed alternately along an optical path through a gas mixture containing the gas to be detected and along a reference path where the beam is not exposed to the gas to be detected. The reference path may be through a reference gas transparent to radiation of the particular waveband. The absorption of the radiation by the gas to be detected can be derived from the difference in the measured intensities of the beam passed along each optical path and hence the concentration of the gas can be determined.

The selection of alternate optical paths can be achieved either by mechanical means which deflect the beam into the fixed separate optical paths, or by mechanical means, such as a rotor, which successively present the gas to be detected and the reference gas to the beam of fixed frequency. The reference gas may be contained in a tube which is an integral part of the rotor. An example of this type of arrangement is described in UK Patent No. 1601233.

A second type of detector measures the absorption of radiation passed along a single fixed optical path through a mixture of gases conaining the gas to be detected by successively passing a first and a second waveband along the optical path. The first waveband is centered on a frequency which exhibits strong absorption by the gas to be detected, and the second waveband is centered on a nearby frequency the absorption strenght of which by the gas to be detected is known as a fraction of the absorption strenght of the first frequency. The successive selection of the first and second wavebands can be achieved by a rotating wheel, or other mechanical means, which successively present band-pass filters to the beam to successively select the first and second wavebands for transmission along the optical path.

The need for moving parts in the instrument described is a major limitation in the design of instruments to meet the environmental requirements of industrial sites. This limitation applies to both fixed-location and also portable instruments.

Previous attempts to overcome the need for moving parts have involved two broad band sources with separate filters to select a measurement waveband corresponding to an absorption feature of the gas to be detected and a reference band to which the gas to be detected is transparent. Radiation from one source is re-directed by a beam splitter on to a common optical axis with radiation from the other source and thence onto a collimating lens from which the collimated emergent beam traverses an open path wherein the gas to be detected is present. A reflector returns the radiation back along the same path through the collimating lens and thereafter is diverted by a beam splitter on to a detector. The radiation beams are separately and differently modulated so that the detected radiation at the two wavelengths can be individually detected.

In such an arrangement both sources and detector must be placed close to the focus of the collimating lens or the foci as defined by the beam splitters. The optical efficiency of this system is limited by the aperture of the collimating lens. For a practically sized lens, this limitation results in operating the sources at an appreciable power level, necessitating a cooling system for the equipment and means to prevent oxidation of the metal elements of the sources which impairs their emission. This is usually achieved by filling the entire enclosure of the instrument with an inert gas which can lead to difficulties in servicing and adjusting the instrument.

Gas detecting means according to the preamble to Claim 1 are described in US-A-4899053. Other gas detecting apparatus are described in US-A-4489239 and JP-A-62201334.

A gas detecting apparatus according to the present invention is as defined in the characterising part of Claim 1.

Preferably the absorption of the second waveband is a known ratio of the absorption of the first waveband.

The term "combining the beams" is intended to refer to the alignment of the beam on a common optical axis.

An or each collimator preferably comprises a parabolic reflector, still preferably an off-axis paraabolic reflector, at or near the focal point of which is placed the source of radiation to be collimated. Other concave-surfaced reflectors may be used to give sufficient focusing with finite sized sources and detectors. Multi-faceted reflectors may also be used.

The arrangement of optical elements is preferably located in a sealable enclosure, having a window transparent to the radiation at the first and the second waveband frequencies. The radiation emergent from the gas sample is preferably reflected back into the enclosure by a suitably placed reflector. The reflector is preferably a retro-reflector.

It may be an advantage of the invention that the combination, and any subsequent splitting or combining of the beams will be effected on collimated beams and hence the distances between the combiners, splitters and sources are not critical. Futhermore, additional sources, each with a suitable filter, may be added in an optical sub-arrangment to produce beams of electromagnetic radiation of additional wavebands which are then added to the combined collimated beam.

An advantage of using a concave-surfaced reflector to produce a collimated beam of radiation may be that low power sources, for example minature filament bulbs, may be placed at or near the focal point of the reflector thus reducing the problem of heating effects produced by the source.

According to a second aspect of the invention there is provided a gas detector comprising a substrate carrying an arrangement of optical elements, including at least one source of electromagnetic radiation and at least one photosensitive detector, wherein mountings for one or more optical elements are integrally moulded with the substrate.
In one form of the invention, the optical elements include at least one reflector which comprises a reflective coating deposited on a surface of the substrate. The reflective coating may be further coated in a protective layer, for example of magnesium fluoride or silicon oxide.

Preferably the substrate forms parts of a sealable enclosure.

Such a gas detector may have the advantage that the location and alignment of an or each of the optical elements can be predetemined and fixed. This has advantages in the design of a robust instrument comprising an arrangement of optical elements. Furthermore, the sealed enclosure can be readily filled with an inert gas, or it may contain a desiccant to produce a dry gas by the removal of water vapour, or it may contain an absorbing material, to remove corrosive materials or interferent gases, such as for example carbon dioxide from air. Only this enclosure need be filled with the gas or contain the dessicant or absorbing material, if all the optical components that may be vulnerable to the atmosphere are contained therein.

According to a further aspect of the present invention there is provided a gas detector having the arrangement of optical elements described above, wherein mountings for the sources, the detector and the beam combiner are integrally moulded with a substrate forming part of a sealable enclosure and, where appropriate, the concave-surfaced reflectors comprises reflective coating deposited on preshaped surfaces of the substrate.

A gas detector according to this aspect of the invention can provide an apparatus which is robust and capable of withstanding the harsh environment that may be encountered in the on-site detection of gases. Futhermore, the compact design and good optical efficiency, allowing low power sources to be used, are features particularly suited for a portable instrument.

A preferred embodiment of the present invention will now be described with reference to the accompanying drawings; in which
Fig. 1 shows schematically an optical arrangement for a gas detector according to the present invention
Fig. 2 shows schematically a modification of the arrangement shown in Fig. 1
Fig. 3 shows schematically a further modification of the arrangement shown in Fig. 1 including an optical sub-arrangement

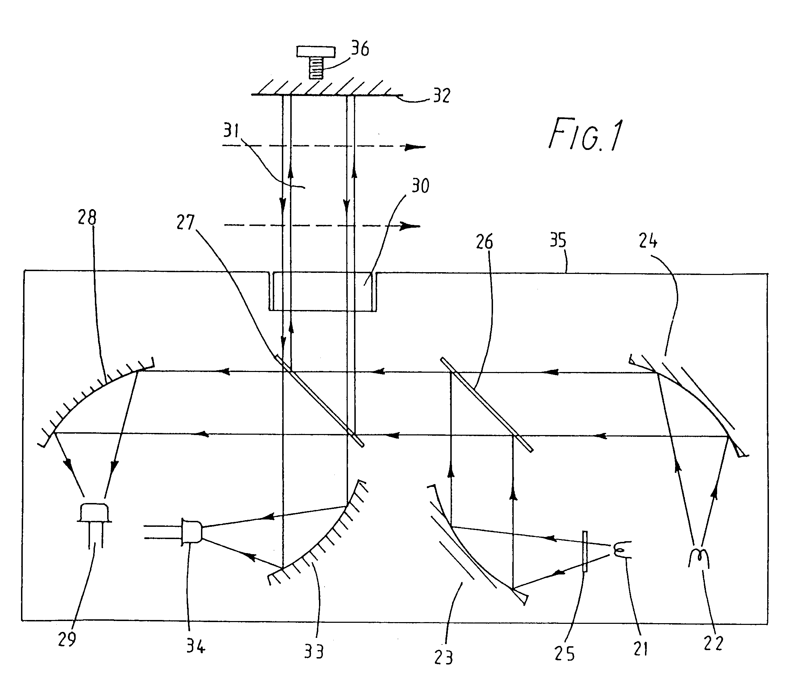

Refering to Figure 1, this shows schematically the optical arrangement for a detector using two sources of radiation to provide two distinct wavebands to detect one gas.

A first source 21 is placed at the focal point of a first off-axis parabolic reflector 23 and a second source 22 is placed at the focal point of a second off-axis parabolic reflector 24. The radiation from each source is collimated by the respective reflector. A band pass filter 25 is placed in the path of the radiation produced by the first source 21 to allow the transmission of a narrow range of frequencies of infra-red radiation centred on a frequency which exhibits an absorption characteristic in the infra-red absorption spectrum of the gas to be detected. The transmitted, collimated beam produced by the first source 21 is hereinafter referred to as the sample beam. The beam from the second source 22, collimated by the second off-axis parabolic reflector 24 impinges on a reference filter 26 inclined at an angle of 45 degrees to the axis of the beam. The reference filter is similar to the first band pass filter and is selected to transmit infra-red radiation of a narrow range of frequencies centered on a frequency at which the absorption strength by the gas to be detected is a known ratio of the absorption strength of the sample beam. For example, this ratio may be zero.

The beam emergent from the reference filter 26 is hereinafter referred to as the reference beam. The reference beam is preferably centred at a frequency nearby that of the sample beam so that the two beams are similary transmitted and reflected through the optical system.

The reference filter and beam combiner, 26 also acts as a reflector to the sample beam and effectively combines the sample beam, once reflected, with the reference beam into a single collimated beam. A beam splitter 27 divides the combined sample and reference beam into a transmitted portion and a reflected portion. The transmitted portion binges on a third off-axis parabolic reflector 28 which reflects and focuses this transmitted beam to a compensation detector 29 located at the focal point of the third parabolic reflector 28.

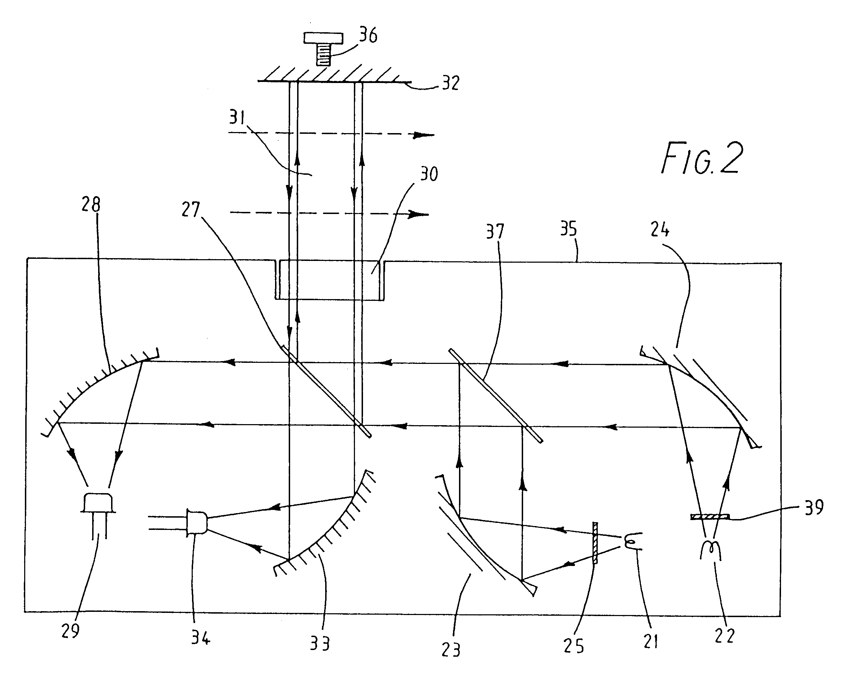

Alternatively, a non-filtering beam combiner, 37 may be used in conjunction with a reference filter 39 placed in the path of the reference beam between the second source 22 and the beam combiner 37. This modification is shown in Figure 2.

The portion of the combined collimated beam reflected by the beam splitter 27 passes normally through a parallel-sided window 30 to traverse an optical path 31 through a mixture of gases including the gas to be detected. The beam emergent from the gas sample is reflected by a retro-reflector 32 to return through the gas sample along the optical path 31 and through the window 30 to the beam splitter 27. The return beam is transmitted by the beam splitter 27 to be focused by a fourth off-axis parabolic reflector 33 to a measurement detector 34 located at the focal point of the fourth parabolic reflector 33.

Each of the four off-axis parabolic reflectors 23, 24, 28 & 33 comprises a reflective coating deposited on a surface of a substrate forming part of an optical block 35. The mountings for the first and second sources 21 & 22, the band pass filters 25 & 26 (or 39), the beam splitter 27 (and 37), the window 30 and the detectors 29 and 34 are integrally formed with the substrate forming of the optical block.

The optical block 35 is solid and, in the present embodiment, is made of a moulded plastics material. It may have any number of its faces moulded as mountings for optical elements or moulded as surfaces for reflectors. The remaining faces of the block can be separately formed attached to the integrally moulded face(s) to form a gas-tight seal. In another embodiment, the entire block is an integral moulding.

The surfaces of the parabolic reflectors 23, 24, 28 and 33 are formed by depositing a layer of a reflective material on the preformed parabolic shaped faces of the substrate. A suitable reflective material is a metal such as aluminium, which provides an acceptable reflectivity. The deposited metal may be additionally coated in a protective layer of, for example, magnesium fluoride or silicon oxide.

In the present embodiment, the optical block is completely sealed and filled with dry air or an inert gas such as nitrogen. It can also be fitted with chemical dessicants or chemical absorbers to prevent corrosion or oxidation of the reflecting surfaces and to remove spectroscopic interferents.

Only the optical block is filled with dry air or inert gas. The power supply and electronic circuitry are contained in a separate part of the instrument and are thus easily accessible for maintenance.

The window 30 is formed of a material which transmits the reference beam and the sample beam with minimum absorption. For example, in the detection of methane, a suitable window material is calcium fluoride which is transparent to both the reference beam and the sample beam, characteristically of wavelength 3.0 and 3.3 um, respectively. The window may be secured directly to the optical block, for example by adhesive. Alternatively, it may be held by clamping means which include means for producing a gas seal between the optical block and the window, for example an 'O' ring seal.

The length of the optical path 31 through the gas mixture may be varied. The retroreflector may be integrally formed with the instrument. Alternatively it may be separately located to allow for a long open optical path 31. For embodiments having an integrally formed retroreflector, the length of the optical path 31 may be altered by mechanical means, such as for example spacers or a screw mechanism. The adjustment means are located outside the sealed optical block and hence may be easily adjusted without the risk of disturbing the inert atmosphere in the block. The adjustment allows for accommodation of a range of sensitivities of detection and for optimisation of the sensitivity of detection for any one given gas. It will also permit the detection of different gases that absorb the sample beam to different extents.

The advantage of using a retro reflector 32, such as an array of corner cubes, is that the need for accurate alignment of a plane mirror reflector at a normal to the combined collimated beam is avoided. A plane mirror accurately aligned to reflect the combined collimated beam falling normally thereon could of course be used instead of a retro-reflector.

One of the advantages of using an optical source placed at the focal point of an off-axis reflector is that small low power sources, such as minature filament bulbs, may be used, and the problem of countering the heating effect of a larger source is reduced.

The first and second sources 21 and 22 are modulated by sequential pulsing so that the signals produced by the compensator detector 29 and the measurement detector 34 can be processed to extract signals corresponding to the intensity of the sample beam and the reference beam. The sources are preferably pulsed with a selectable mark to space ratio.

The first and second sources may be solid state light emitting diodes which produce narrow band output centred on the required frequency. This type of source has the advantage that the associated reference and sample filters may be omitted. Additionally, this type of source may be pulsed at a high frequency to provide modulation and to improve the discrimination against background noise in the detected signal.

Various types of solid state detectors may be used for the compensation and measurement detectors, chosen for their efficiency and response at the particular waveband of operation. The compensation detector 29 and the measurement detector 34 may be of the pyroelectric type which respond uniformly over a wide waveband. One of the advantages of this type of detector is that it integrates the energy received in each pulse. It is therefore possible to compensate for loss of efficiency, as a result of foreign material deposited on the optical surfaces, by varying the mark to space ratio of the pulsing of the source to maintain the power level sensed at the measuring detector. Its placement at the focal point of a parabolic reflector means that a small detector can be used without loss of efficiency.

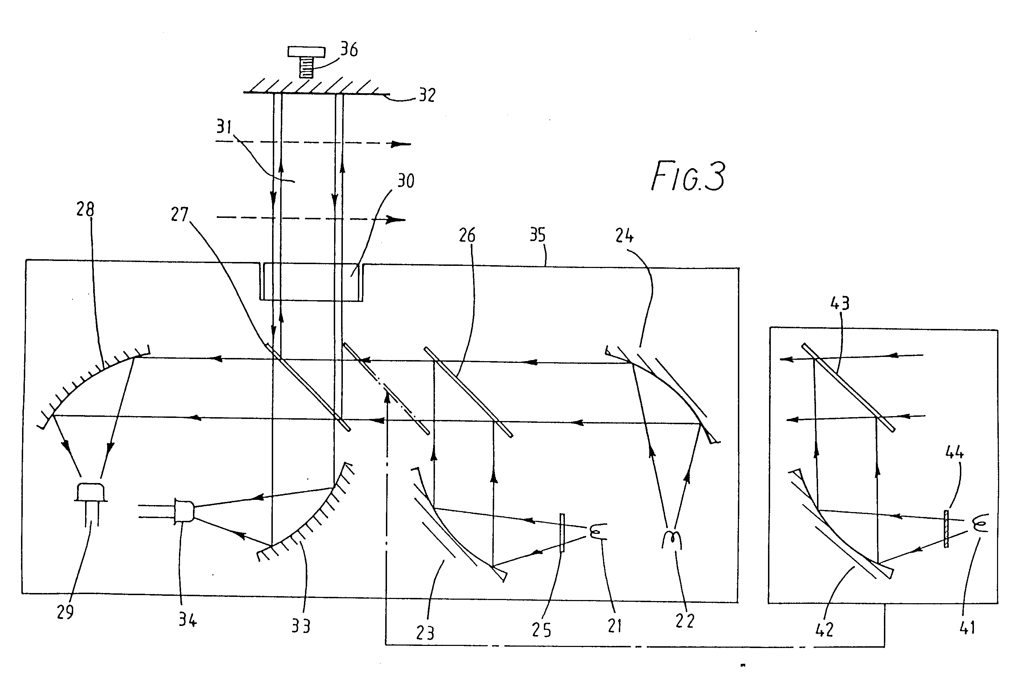

Figure 3 shows a furter modification of the optical arrangement comprising an optical sub-arrangement consisting of a third source 41 placed at the focal point of a fifth off-axis parabolic reflector 42 and a further beam combiner 43. The radiation from the third source passes through a third band pass filter 44 to select radiation of a narrow range of frequencies centred on, for example, a frequency which exhibits an absorption chacteristic in the absorption spectrum of a second gas to be detected, the second gas being in the mixture of gases including the first gas. Alternatively, the centre frequency of the third beam could correspond to a second characterisitic in the absorption spectrum of the first gas to be detected.

This sub-arrangement is placed in the optical block between the reference filter 26 and the first beam splitter 27 to achieve combination of the collimated beam from the fifth parabolic reflector 42 with the combined collimated sample and reference beams. The fifth parabolic reflector 42 is similar to the other parabolic reflectors and comprises a reflective coating deposited on a surface of the substrate forming part of the optical block. Similarly, the mountings for the third source 41, the third filter 44 and the further beam combiner 43 are integrally formed with the substrate.

It will be appreciated that any number of additional sources, each with a band pass filter, to select a predetermined waveband, and a concave-surfaced reflector to produce a collimated beam, which beam is then combined with the combined sample and reference beam, could be used in the gas detector to detect any number of gases or to detect a gas by the absorption of any number of characteristic absorptions of the gas, by suitable selection of waveband frequency.

The instument described has relied on the absorption of infra-red radiation but it will be appreciated that the concave-surfaced reflectors, the retro-reflector, the detectors and the window are not wavelength specific and by suitable selection of beam splitters, beam combiners, sources and filters, the optical arrangement is suitable for measuring the absorption by gases, vapours or liquids of radiation of wavelength in the general range of ultra-violet to infra-red (from approx. 200 nm to 20000 nm).

## Claims

1. Apparatus for detecting a gas by selective absorption of electromagnetic radiation comprising a first source (21) of electromagnetic radiation at a first waveband centre on a frequency which exhibits an absorption characteristic with the gas to be detected, a second source (22) of electromagnetic radiation at a waveband centred on a frequency which exhibits a different absorption characteristic with the gas to be detected, a beam combiner (26) to combine beams from the first and second sources (21 and 22), means (27) for passing the combined beam through a sample of gas to be tested and a photosensitive measurement detector (34) for measuring the intensity of the combined beam emergent from the gas sample, characterised by a first collimator (23) to collimate the radiation from the first source (21) into a first collimated beam and a second collimator (24) to collimate the radiation from the second source (22) into a second collimated beam, by a compensator detector (29), and by a beam splitter (27) positioned in the path of the combined collimated beam to divide the input beam into two output beams, one of the output beams forming the beam through the sample of gas to be tested, and the other output beam being directed to the compensator detector (29) without passing through the sample of gas to be tested.

2. Gas detecting apparatus according to Claim 1, wherein the detector (34) is of the type that selectively measures the intensity of the radiation at the first waveband and the intensity of the radiation at the second waveband.

3. Gas detecting apparatus according to Claims 1 or 2, wherein the emission from the first and second sources (21 and 22) is modulated.

4. Gas detecting apparatus according to any of Claims 1 to 3, wherein the compensator detector (29) is placed at or near the focal point of a concave-surfaced reflector (28).

5. Gas detecting apparatus according to any of the above claims, further including a reflector (32) to reflect the beam emergent from the gas sample back therethrough.

6. Gas detecting apparatus according to Claim 5, wherein the reflector (32) is a retro-reflector.

7. Gas detecting apparatus according to Claims 5 or 6, wherein the reflector (32) is an integral part of the arrangement of optical elements.

8. Gas detecting apparatus according to Claims 5 or 6, wherein the reflector (32) is separate from the arrangement of optical elements

9. Gas detecting apparatus according to any of the above claims, wherein the collimators comprise a concave-surfaced reflector (23 and 24) at the focal points of which are situated the sources (21, 22).

10. Gas detecting apparatus according to any of the above claims, wherein each source (21, 22) of electromagnetic radiation comprises a broad band source the output of which is passed through an optical band pass filter (25, 26) to select a predetermined waveband of radiation before being combined at the beam combiner (26).

11. Gas detecting apparatus according to any of Claims 1 to 9, wherein each source of electromagnetic radiation comprises an unfiltered source of narrow band width.

12. Gas detecting apparatus according to any of Claims 1 to 9, wherein each source of electromagnetic radiation comprises a light emitting diode source of narrow band width.

13. Gas detecting apparatus according to any of the Claims 1 to 10, wherein the beam combiner (26) also acts as a filter to select a predetermined waveband of electromagnetic radiation.

14. Gas detecting apparatus according to any of the preceding claims, wherein the absorption of the second waveband is a known ratio of the absorption of the first waveband.

15. Gas detecting apparatus according to any of the above claims, wherein the photosensitive measurement detector (34) is placed at or near the focal point of a concave-surfaced reflector (33).

16. Gas detecting apparatus according to any of Claims 4 to 15, wherein the or each concave-surfaced reflector is an off-axis parabolic reflector.

17. Gas detecting apparatus according to any of the above claims, further comprising a third source (41) of electromagnetic radiation at a third frequency, a third collimator (42) to collimate the radiation of the third source (41) into a third collimated beam and means (43) for combining the third collimated beam with the combined collimated beam.

18. Gas detecting apparatus according to any of the above claims, including a substrate (35) and wherein optical elements of the detecting apparatus other than reflectors are held by mountings which are integrally formed with the substrate (35).

19. Gas detecting apparatus according to any of Claims 1 to 17, including the optical elements of the detecting apparatus including the sources of electromagnetic radiation, the photosensitive detector and the compensator detector, and wherein mountings for one or more of optical elements are integrally moulded with a substrate.

20. Gas detecting apparatus according to Claim 18 or 19, in which the optical elements include at least one reflector which comprises a reflective coating deposited on a surface of the substrate.

21. Gas detecting apparatus according to Claim 20, wherein the reflective coating is a layer of aluminum.

22. Gas detecting apparatus according to Claims 20 or 21, wherein the reflective coating is further coated with a protective layer, such as magnesium fluoride or silicon oxide.

23. Gas detecting apparatus according to any of Claims 20 to 22, wherein the substrate is formed from a plastics material.

24. Gas detecting apparatus according to any of Claims 18 to 23, in which the substrate forms a sealed housing.

25. Gas detecting apparatus according to Claim 24, in which the housing is filled with an inert gas or contains a dessicant or other absorber.

## Patentansprüche

1. Vorrichtung zum Nachweisen eines Gases durch selektive Absorption von elektromagnetischer Strahlung, die aufweist eine erste Quelle (21) elektromagnetischer Strahlung auf einem ersten Wellenband, das auf eine Frequenz ausgerichtet ist, welche eine Absorptionscharakteristik mit dem nachzuweisenden Gas zeigt, eine zweite Quelle (22) elektromagnetischer Strahlung auf einem Wellenband, das auf eine Frequenz ausgerichtet ist, welche eine unterschiedliche Absorptionscharakteristik mit dem nachzuweisenden Gas zeigt, einen Strahlkombinierer (26) zum Kombinieren der Strahlen der ersten und zweiten Quelle (21 und 22), eine Einrichtung (27), zum Führen des kombinierten Strahls durch eine zu testende Gasprobe und einen lichtempfindlichen Meßdetektor (34) zum Messen der Intensität des kombinierten Strahls, der aus der Gasprobe hervorgeht, gekennzeichnet durch einen ersten Kollimator (23), um die Strahlung der ersten Quelle (21) in einen ersten parallel gerichteten Strahl parallel zu richten und einen zweiten Kollimator (24), um die Strahlung der zweiten Quelle (22) in einen zweiten parallel gerichteten Strahl parallel zu richten, durch einen Kompensationsdetektor (29) und durch einen Strahlteiler (27), der im Weg des kombinierten parallel gerichteten Strahls angeordnet ist, um den Eingangsstrahl in zwei Ausgangsstrahlen zu teilen, wobei einer der Ausgangsstrahlen den Strahl durch die zu testende Gasprobe bildet, und der andere Ausgangsstrahl zum Kompensationsdetektor (29) gerichtet wird, ohne ihn durch die zu testende Gasprobe zu führen.

2. Gas nachweisende Vorrichtung nach Anspruch 1, wobei der Detektor (34) von dem Typ ist, der selektiv die Intensität der Strahlung auf dem ersten Wellenband und die Intensität der Strahlung auf dem zweiten Wellenband mißt.

3. Gas nachweisende Vorrichtung nach Anspruch 1 oder 2, wobei die Emission von der ersten und zweiten Quelle (21 und 22) moduliert ist.

4. Gas nachweisende Vorrichtung nach einem der Ansprüche 1 bis 3, wobei der Kompensationsdetektor 29 im oder nahe des Brennpunktes eines konkavflächigen Reflektors (28) angeordnet ist.

5. Gas nachweisende Vorrichtung nach einem der vorstehenden Ansprüche, ferner mit einem Reflektor (32), um den aus der Gasprobe hervorgegangenen Strahl durch diese zurückzuwerfen.

6. Gas nachweisende Vorrichtung nach Anspruch 5, wobei der Reflektor (32) ein Retro-Reflektor ist.

7. Gas nachweisende Vorrichtung nach Anspruch 5 oder 6, wobei der Reflektor 32 ein integraler Teil der Anordnung der optischen Elemente ist.

8. Gas nachweisende Vorrichtung nach Anspruch 5 oder 6, wobei der Reflektor (32) von der Anordnung der optischen Elemente getrennt ist.

9. Gas nachweisende Vorrichtung nach einem der vorstehenden Ansprüche, wobei die Kollimatoren einen konkavflächigen Reflektor (23 und 24) aufweisen, in dessen Brennpunkten die Quellen (21, 22) angeordnet sind.

10. Gas nachweisende Vorrichtung nach einem der vorstehenden Ansprüche, wobei jede Quelle (21, 22) elektromagnetischer Strahlung eine Breitbandquelle aufweist, dessen Ausgabe durch ein optisches Bandpaßfilter (25, 26) geführt wird, um ein vorbestimmtes Wellenband von Strahlung vor dem Kombinieren an dem Strahlkombinierer (26) auszuwählen.

11. Gas nachweisende Vorrichtung nach einem der Ansprüche 1 bis 9, wobei jede Quelle elektromagnetischer Strahlung eine ungefilterte Quelle mit schmaler Bandbreite aufweist.

12. Gas nachweisende Vorrichtung nach einem der Ansprüche 1 bis 9, wobei jede Quelle elektromagnetische Strahlung eine Licht emittierende Diodenquelle mit schmaler Bandbreite aufweist.

13. Gas nachweisende Vorrichtung nach einem der Ansprüche 1 bis 10, wobei der Strahlkombinierer (26) auch als Filter wirkt, um ein vorbestimmtes Wellenband elektromagnetischer Strahlung auszuwählen.

14. Gas nachweisende Vorrichtung nach einem der vorstehenden Ansprüche, wobei die Absorption des zweiten Wellenbandes in einem bekannten Verhältnis zur Absorption des ersten Wellenbandes steht.

15. Gas nachweisende Vorrichtung nach einem der vorstehenden Ansprüche, wobei der lichtempfindliche Meßdetektor (34) im oder nahe des Brennpunktes eines konkavflächigen Reflektors (33) angeordnet ist.

16. Gas nachweisende Vorrichtung nach einem der Ansprüche 4 bis 15, wobei der oder jeder konkavflächige Reflektor ein außeraxialer parabolischer Reflektor ist.

17. Gas nachweisende Vorrichtung nach einem der vorstehenden Ansprüche, die ferner eine dritte Quelle (41) elektromagnetischer Strahlung bei einer dritten Frequenz, einen dritten Kollimator (42), um die Strahlung der dritten Quelle (41) in einen dritten parallel gerichteten Strahl parallel zu richten, und eine Einrichtung (43) zum Kombinieren des dritten parallel gerichteten Strahls mit dem kombinierten parallel gerichteten Strahl aufweist.

18. Gas nachweisende Vorrichtung nach einem der vorstehenden Ansprüche, mit einem Substrat (35) und worin optische Elemente der nachweisenden Vorrichtung, die nicht Reflektoren sind, durch Halterungen, die integral mit dem Substrat (35) gebildet sind, gehalten sind.

19. Gas nachweisende Vorrichtung nach einem der Ansprüche 1 bis 17, mit den optischen Elementen der nachweisenden Vorrichtung mit den Quellen elektromagnetischer Strahlung, dem lichtempfindlichen Detektor und dem Kompensationsdetektor, und mit dem Kompensationsdetektor, und worin Halterungen für ein oder mehrere der optischen Elemente mit einem Substrat integral geformt sind.

20. Gas nachweisende Vorrichtung nach Anspruch 18 oder 19, wobei die optischen Elemente mindestens einen Reflektor mit einem auf einer Fläche des Substrats angelagerten reflektierenden Überzug aufweisen.

21. Gas nachweisende Vorrichtung nach Anspruch 20, wobei der reflektierende Überzug eine Schicht aus Aluminium ist.

22. Gas nachweisende Vorrichtung nach Anspruch 20 oder 21, wobei der reflektierende Überzug ferner mit einer Schutzschicht, wie Magnesiumfluorid oder Siliziumoxid, überzogen ist.

23. Gas nachweisende Vorrichtung nach einem der Ansprüche 20 bis 22, wobei das Substrat aus einem Kunststoffmaterial geformt ist.

24. Gas nachweisende Vorrichtung nach einem der Ansprüche 18 bis 23, in welcher das Substrat ein gekapseltes Gehäuse bildet.

25. Gas nachweisende Vorrichtung nach Anspruch 24, wobei das Gehäuse mit einem Inertgas gefüllt ist oder ein Trockenmittel oder andere Absorber enthält.

## Revendications

1. Dispositif pour détecter un gaz par absorption sélective d'une radiation électromagnétique comprenant une première source (21) de radiation électromagnétique dans une première bande de longueur d'ondes centrée sur une fréquence pour laquelle le gaz à détecter présente une caractéristique d'absorption, une deuxième source (22) de radiation électromagnétique dans une bande de longueur d'ondes centrée sur une fréquence pour laquelle le gaz à détecter présente une caractéristique d'absorption différente, un mélangeur de faisceaux (26) permettant de mélanger les faisceaux émis par les première et deuxième sources (21 et 22), un moyen (27) permettant de faire passer le faisceau mélangé à travers un échantillon du gaz à tester et un détecteur de mesure photosensible (34) destiné à mesurer l'intensité du faisceau mélangé à la sortie de l'échantillon de gaz, caractérisé par un premier collimateur (23) qui collimate la radiation émise par la première source (21) dans un premier faisceau collimaté et par un deuxième collimateur (24) qui collimate la radiation émise par la deuxième source (22) dans un deuxième faisceau collimaté, par un détecteur compensateur (29), et par un séparateur de faisceau (27) positionné dans le trajet du faisceau collimaté mélangé de façon à séparer le faisceau d'entrée en deux faisceaux de sortie, un des faisceaux de sortie constituant le faisceau traversant l'échantillon de gaz à tester, et l'autre faisceau de sortie étant dirigé vers le détecteur compensateur (29) sans passer par l'échantillon de gaz à tester.

2. Dispositif détecteur de gaz selon la revendication 1, dans lequel le détecteur (34) est du type qui mesure sélectivement l'intensité de la radiation dans la première bande de longueur d'ondes et l'intensité de la radiation dans la deuxième bande de longueur d'ondes.

3. Dispositif détecteur de gaz selon la revendication 1 ou 2, dans lequel l'émission de la première et de la deuxième sources (21 et 22) est modulée.

4. Dispositif détecteur de gaz selon l'une quelconque des revendications 1 à 3, dans lequel le détecteur compensateur (29) est placé au foyer ou à proximité du foyer d'un réflecteur à surface concave (28).

5. Dispositif détecteur de gaz selon l'une quelconque des revendications précédentes, comprenant en outre un réflecteur (32) pour réfléchir le faisceau émergent de l'échantillon de gaz et le renvoyer à travers lui.

6. Dispositif détecteur de gaz selon la revendication 5, dans lequel le réflecteur (32) est un rétroréflecteur.

7. Dispositif détecteur de gaz selon les revendications 5 ou 6, dans lequel le réflecteur (32) fait partie intégrante de la disposition des éléments optiques.

8. Dispositif détecteur de gaz selon les revendications 5 ou 6, dans lequel le réflecteur (32) est séparé de la disposition des éléments optiques.

9. Dispositif détecteur de gaz selon l'une quelconque des revendications précédentes, dans lequel les collimateurs comprennent un réflecteur à surface concave (23 et 24) aux foyers duquel sont situées les sources (21, 22).

10. Dispositif détecteur de gaz selon l'une quelconque des revendications précédentes, dans lequel chaque source (21, 22) de radiation électromagnétique est constituée d'une source large bande dont la sortie traverse une filtre optique passe bande (25, 26) pour sélectionner une bande de longueur d'ondes de radiation prédéterminée avant d'être mélangée dans le mélangeur de faisceau (26).

11. Dispositif détecteur de gaz selon l'une quelconque des revendications 1 à 9, dans lequel chaque source de radiation électromagnétique comprend une source à largeur de bande étroite non filtrée.

12. Dispositif détecteur de gaz selon l'une quelconque des revendications 1 à 9, dans lequel chaque source de radiation électromagnétique comprend une source à diode électroluminescente à largeur de bande étroite.

13. Dispositif détecteur de gaz selon l'une quelconque des revendications 1 à 10, dans lequel le mélangeur de faisceau (26) fait également fonction de filtre pour sélectionner une bande de longueur d'ondes prédéterminée de la radiation électromagnétique.

14. Dispositif détecteur de gaz selon l'une quelconque des revendications précédentes, dans lequel l'absorption de la deuxième bande de longueur d'ondes est en rapport connu avec l'absorption de la première bande de longueur d'ondes.

15. Dispositif détecteur de gaz selon l'une quelconque des revendications précédentes, dans lequel le détecteur de mesure photosensible (34) est placé au foyer ou à proximité du foyer d'un réflecteur à surface concave (33).

16. Dispositif détecteur de gaz selon l'une quelconque des revendications 4 à 15, dans lequel le ou chaque réflecteur à surface concave est un réflecteur parabolique désaxé.

17. Dispositif détecteur de gaz selon l'une quelconque des revendications précédentes, comprenant en outre une troisième source (41) de radiation électromagnétique à une troisième fréquence, un troisième collimateur (42) pour collimater la radiation de la troisième source (41) dans un troisième faisceau collimaté et un moyen (43) permettant de mélanger le troisième faisceau collimaté avec le faisceau collimaté mélangé.

18. Dispositif détecteur de gaz selon l'une quelconque des revendications précédentes, comprenant un substrat (35) et dans lequel les éléments optiques du dispositif détecteur autres que les réflecteurs sont maintenus par un assemblage qui est intégralement constitué par le substrat (35).

19. Dispositif détecteur de gaz selon l'une quelconque des revendications 1 à 17, comprenant les éléments optiques du dispositif détecteur qui comprennent les sources de radiation électromagnétique, le détecteur photosensible et le détecteur compensateur, et dans lequel l'assemblage d'un ou de plusieurs éléments optiques est intégralement moulé dans un substrat.

20. Dispositif détecteur de gaz selon la revendication 18 ou 19, dans lequel les éléments optiques comprennent au moins un réflecteur qui est comprend un revêtement réfléchissant déposé sur une surface du substrat.

21. Dispositif détecteur de gaz selon la revendication 20, dans lequel le revêtement réfléchissant est une couche d'aluminium.

22. Dispositif détecteur de gaz selon la revendication 20 ou 21, dans lequel le revêtement réfléchissant est en outre recouvert d'une couche de protection, par exemple en fluorure de magnésium ou en oxyde de silicium.

23. Dispositif détecteur de gaz selon l'une quelconque des revendications 20 à 22, dans lequel le substrat est constitué en un matériau plastique.

24. Dispositif détecteur de gaz selon l'une quelconque des revendications 18 à 23, dans lequel le substrat constitue un boîtier fermé.

25. Dispositif détecteur de gaz selon la revendication 24, dans lequel le boîtier est rempli d'un gaz inerte ou contient un dessiccateur ou un autre absorbant.
